Europäisches Patentamt

(19) European Patent Office

Office européen des brevets

(11) Publication number: **0 003 439**
**B1**

# (12) EUROPEAN PATENT SPECIFICATION

(45) Date of publication of patent specification: **06.01.82**

(21) Application number: **79300140.5**

(22) Date of filing: **29.01.79**

(51) Int. Cl.³: **F 01 M 1/08, F 16 J 1/08, F 02 F 1/20**

(54) Internal combustion engine.

(30) Priority: **30.01.78 JP 9008/78**
**30.01.78 JP 9009/78**
**30.01.78 JP 9010/78**
**30.01.78 JP 9813/78**

(43) Date of publication of application:
**08.08.79 Bulletin 79/16**

(45) Publication of the grant of the European patent:
**06.01.82 Bulletin 82/1**

(84) Designated Contracting States:
**DE FR GB NL SE**

(56) References cited:
**CH - A - 496 164**
**CH - A - 591 647**
**DE - C - 344 269**
**DE - C - 969 837**
**FR - A - 1 383 193**

(73) Proprietor: **FUJI JUKOGYO KABUSHIKI KAISHA**
**7-2 Nishishinjuku 1-chome Shinjuku-ku**
**Tokyo (JP)**

(72) Inventor: **Hiroshi, Yamaguchi**
**111-2 Naracho, Ohmiya-shi**
**Saitama-Pref (JP)**
Inventor: **Hiroaki, Kaneko**
**629-15 Haraichi, Ageo-shi**
**Saitama-Pref (JP)**
Inventor: **Toshihiro, Nagano**
**7-14-6 Todoroki, Setagaya-ku**
**Tokyo (JP)**

(74) Representative: **Eyles, Christopher Thomas et al,**
**BATCHELLOR, KIRK & EYLES 2 Pear Tree Court**
**Farringdon Road**
**London, EC1R 0DS (GB)**

Courier Press, Leamington Spa, England.

# Internal combustion engine

The present invention relates to an internal combustion engine which is powered by converting the reciprocating motion of a piston to rotating motion.

Such a type of internal combustion engine with a reciprocating piston is generally provided with a predetermined piston clearance between the piston and the inner wall of the cylinder. Because thermal expansion of the piston, especially if made of aluminum alloy, is greater than the cylinder, it is necessary to provide a large piston clearance. Therefore, the piston swings about the piston pin within the piston clearance, when the moving direction of the piston is turned at the stroke ends. This means that the periphery of the piston strikes the inner wall of the cylinder to make a slapping noise.

It is known to introduce lubricating oil to the piston of an internal combustion engine during its reciprocation. Thus Swiss Patent Specification No. A—496164 shows the provision of a lubricating pump arranged to deliver lubricant to the piston at that instant of the piston stroke when the piston rings are passing in front of the outlets from the pump to the cylinder. German Patent Specification No. 344269 discloses the provision of grooves on the periphery of a piston. However, neither patent specification discloses the provision of a lubricating oil supply system capable of overcoming the problem outlined above.

The present invention seeks to provide an improved reciprocating engine in which piston slapping may be reduced to abate the noise, and in which wear of the piston and cylinder may be decreased, and which has a cooling effect on the piston.

According to the invention an internal combustion engine comprises a cylinder, a piston reciprocating in said cylinder, piston rings provided solely on the upper portion of said piston, at least one oil port provided in the wall member of said cylinder, said oil port or ports being in communication with the space between said wall member and said piston, means for supplying a part of the lubricating oil under pressure to said oil port or ports, conduit means for communicating said oil port or ports with said means for supplying a part of the lubricating oil, and at least one oil groove provided on the periphery of said piston so as to communicate with said oil port or ports, characterised in that an annular oil groove is provided adjacent the outside of said cylinder so as to communicate with said oil port or ports, said oil port or ports are positioned to open onto a portion of said piston below a lowermost of said piston rings when said piston is at the bottom dead centre and positioned to open onto a lower end portion of the piston skirt when said piston is at the top dead centre, oil return holes are provided between said rings to communicate said space with the inside space of said piston for returning the oil to the crankcase of said engine and said at least one oil groove is provided so as to communicate with said oil port or ports during reciprocation of the piston.

In prior art engines, the lubricating oil is apt to enter into the combustion chamber passing over the oil ring because excessive oil is supplied under pressure. Therefore, the present invention seeks to provide an improved internal combustion engine which may prevent the lubricating oil from entering into the combustion chamber and in which the returning of the excess oil is reliably effected to reduce the comsumption of lubricating oil. To this end, an oil return hole passing through the piston is provided between the oil ring and gas ring, whereby the lubricating oil entered between the oil ring and gas ring is, without remaining therein, sent back to the crank case.

Further features and advantages of the present invention will be apparent from the ensuing description given merely by way of example with reference to the accompanying drawings.

Figure 1 is a sectional view showing a main part of an internal combustion engine according to one embodiment of the present invention,

Figure 2 is a sectional view taken along the line II—II of Figure 1,

Figure 3 is an enlarged sectional view showing a part of the engine,

Figure 4 shows the piston of the engine,

Figure 5 is a sectional view showing a part of another type of engine,

Figure 6 shows modification of the piston,

Figures 7 to 10 show various shapes of the oil spreading grooves,

Figures 11 to 13 show various sectional shapes of the grooves.

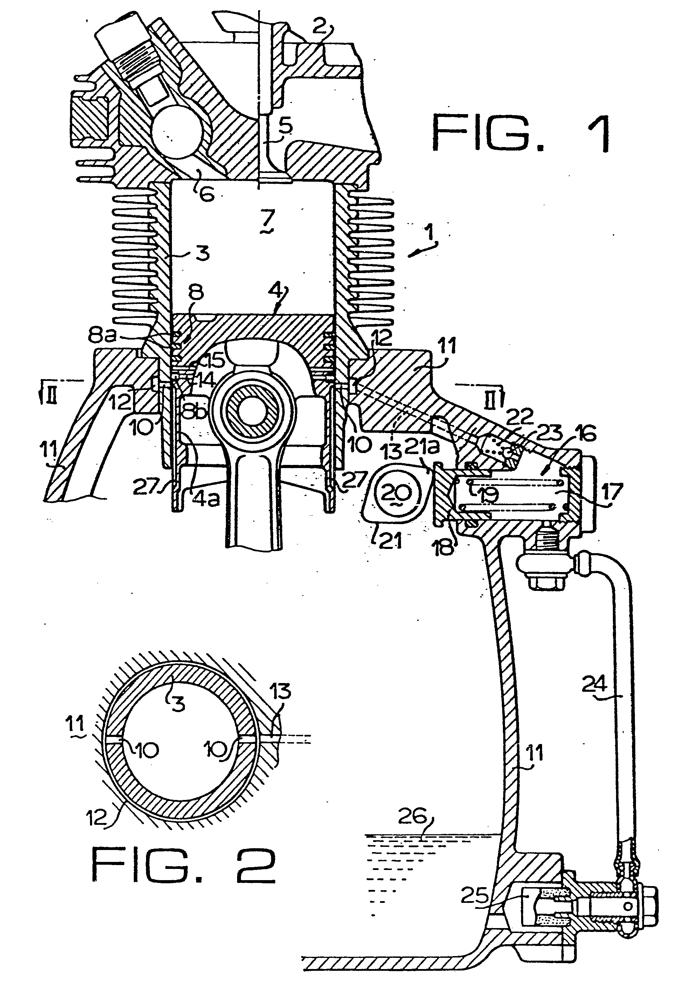

Figures 1 and 2 show an embodiment in which the present invention is applied to a diesel engine. In the drawings, numeral 1 is a cylinder block, 2 is a cylinder head, 3 is a cylinder, and 4 is a piston slidably engaged with the cylinder 3. Formed in the upper portion of the cylinder 3 is a combustion chamber 7 provided with intake or exhaust valve 5 and a fuel injection nozzle 6. Piston rings 8 comprising gas rings 8a and an oil ring 8b are engaged in the annular grooves provided in the periphery of the piston 4, so that the piston 4 slidably reciprocates in the cylinder 3 keeping airtight engagement with the cylinder.

In accordance with the present invention, a pair of diametrically opposite oil ports 10 are provided in the cylinder 3. Each oil port is so arranged that the oil ports open upon the peripheral surface of the piston below the piston ring 8b during the reciprocation of the piston. The lubrication oil ports 10 communicate to an annular oil groove 12, which is provided on the crank case 11 at the portion joined to the cylinder block 1 and the oil groove 12 in turn communicates to the discharge port of an oil pump 16 through an oil passage 13, as shown in dotted lines in Figure 1. The oil pump 16 consists of a plunger 13 slidably provided in a pump chamber 17 which is formed in the crank case 11 and a coil spring 19 set in the pump chamber 17 so as to urge the plunger 18 against a pump driving cam 21 provided on a cam shaft 20 which is rotated in synchronism with the crank shaft (not shown) of the engine. A check valve 23, loaded by a spring 22, is provided on each of the intake and discharge ports of the oil pump 16 respectively (the intake port check valve is not shown). The intake port of the oil pump 16 is communicated through an intake tube 24 and an oil strainer 25 to an oil tank 26 provided in the bottom of crank case 11. In the embodiment shown in the drawings, although two oil ports 10 are provided in the peripheral wall portion of the cylinder 3, the number of the ports may be varied.

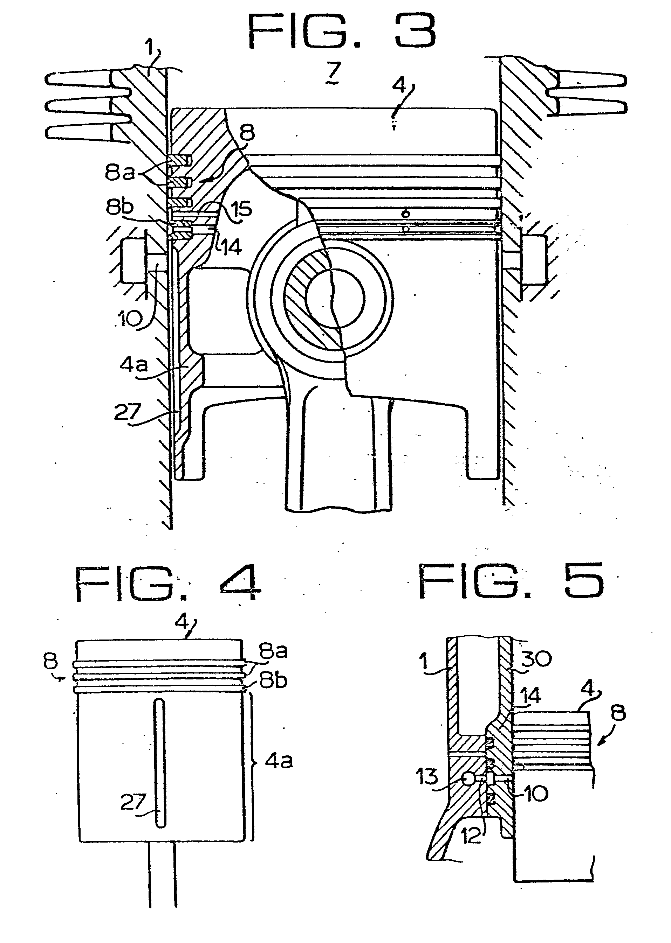

As shown in Figures 1 and 3, a first oil return hole 14 is provided in the bottom of the annular groove of the oil ring 8b communicating with the inside of the piston and a second oil return hole 15 is provided between the oil ring 8b and the lowermost gas ring communicating with the inside of the piston. The first and second oil return holes 14, 15 may be provided in the piston 4 circumferentially at one or more positions.

Further, as shown in Figures 3 and 4, there is provided a pair of oil guide grooves 27 on the periphery of the piston skirt 4a extending in the axial direction and communicating with the oil ports 10 respectively.

In operation, the plunger 18 is operated in reciprocal motion in the pump chamber 17 by the action of the coil spring 19 and protrusion 21a of the cam 21 to effect pumping operation in synchronism with the crank shaft, so that lubricating oil is fed through the oil passage 13 and injected into the space (piston clearance) from the oil ports 10 when the piston 4 is in the bottom dead centre. The lubricating oil injected into the clearance flows in the grooves 27 and overflows to spread in the piston clearance to form a relatively thick oil film; therefore the inclination caused by the change of direction of the piston motion may be limited.

While the piston moves towards the top dead centre, lubricating oil is injected to the oil guide grooves 27 in the same way as when the piston is in the bottom dead centre, diffused over the relatively wide area.

Further, when the piston is at top dead centre, the injected oil forms a relatively thick high pressure oil film over a wide area of the piston clearance, as at the bottom dead centre. Thus, the inclination of the piston at the change of direction at the top dead centre may be prevented to reduce the slapping sound of the piston 4.

The lubricating oil injected from the oil port 10 is prevented from entering directly into the combustion chamber, because each oil port 10 is arranged in the position outside the sliding area of the piston rings 8.

Oil injected in the piston clearance is scratched off by the effect of oil ring 8b into the crank case 11 below, and oil entered into the groove of oil ring 8b is returned back to the crank case through the first oil return hole 14. However, since the provision of the oil return hole 14 is not enough to scratch off a great deal of oil, it may still arise that a part of oil may pass rise over the oil ring 8b and remain in the space between the wall of the cylinder and the land formed between the oil ring 8b and the gas ring 8a. Therefore, this invention provides a second oil return hole 15 to send the oil in the space between the cylinder wall and the land rapidly back into the crank case 11 without remaining in the space and entering into the combustion chamber.

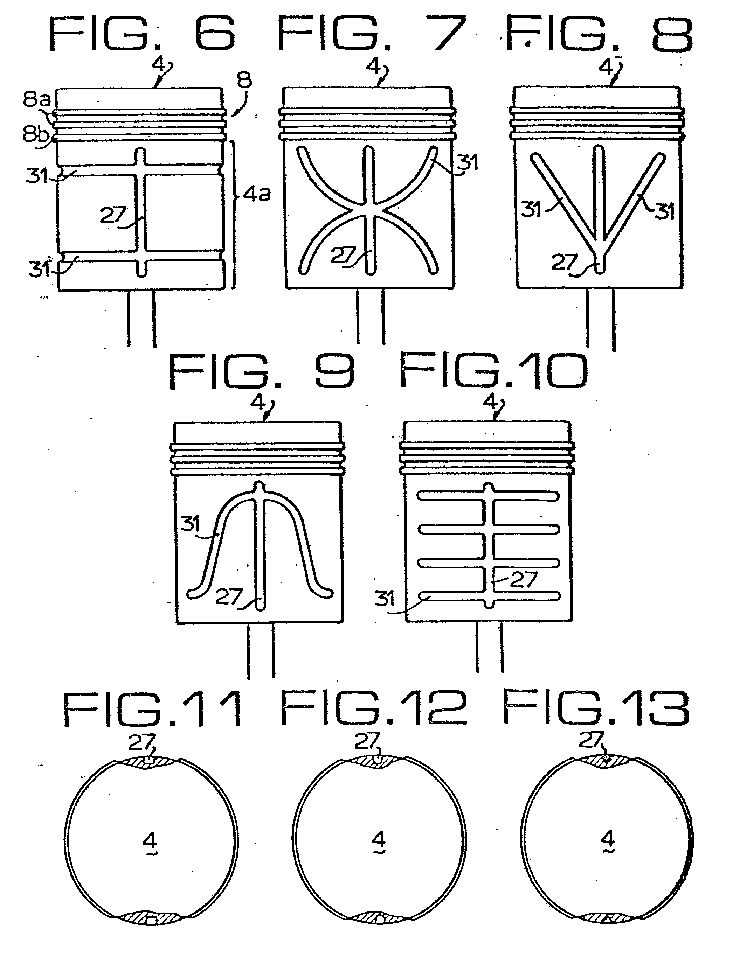

Figure 5 shows a part of cylinder 1 having a cylinder liner 30. In such an engine, the oil port 10 is provided in the liner 30 and the annular oil groove 12 is formed in the outside wall of the liner.

Figure 6 shows a modification of the piston 8. On the periphery of the piston, a pair of annular oil spreading grooves 31 are provided to communicate with the guide groove 27. In accordance with the grooves 31, lubricating oil may be widely spread in the piston clearance. The number and direction, and the sectional shape of the oil spreading grooves 31 may be suitably selected. Figures 7 to 13 show examples of the oil spreading grooves.

Thus, in accordance with the present invention, a part of the lubricating oil is injected into the space between the piston and the wall of cylinder, whereby the swing of the piston at the change of direction may be prevented by the injected lubricating oil, thereby minimizing the noise caused by the piston slapping. Further, because a great deal of lubricating oil is injected into the space between the piston and the wall of cylinder, advantages, such as minimum wear and improved durability, as well as high cooling efficiency of the members, may be obtained.

**Claims**

1. An internal combustion engine comprising a cylinder (3), a piston (4) reciprocating in said cylinder, piston rings (8) provided solely on the upper portion of said piston, at least one oil port (10) provided in the wall member of said cylinder, said oil port or ports being in communication with the space between said wall member and said piston, means (16) for supplying a part of the lubricating oil under pressure to said oil port or ports, conduit means for communicating said oil port or ports with said means for supplying a part of the lubricating oil, and at least one oil groove (27) provided on the periphery of said piston so as to communicate with said oil port or ports, characterised in that an annular oil groove (12) is provided adjacent the outside of said cylinder (1) so as to communicate with said oil port or ports (10), said oil port or ports (10) are positioned to open onto a portion of said piston below a lowermost of said piston rings (8) when said piston (4) is at the bottom dead centre and positioned to open onto a lower end portion of the piston skirt (4a) when said piston (4) is at the top dead centre, oil return holes (14, 15) are provided between said rings (8) to communicate said space with the inside space of said piston for returning the oil to the crankcase of said engine and said at least one oil groove (27) is provided so as to communicate with said oil portion or ports (10) during reciprocation of the piston.

2. An internal combustion engine according to claim 1, characterised in that said means for supplying a part of the lubricating oil is a pump (16) operated in synchronism with the crank shaft of the engine.

3. An internal combustion engine according to claim 2, characterised in that said pump (16) is adapted to supply the oil at the bottom dead centre.

4. An internal combustion engine according to claim 1, 2 or 3, characterised in that it comprises at least a pair of diametrically opposed oil ports (10).

5. An internal combustion engine according to any one of claims 1 to 4, characterised in that said oil groove (27) is arranged along the axial direction of the piston.

**Revendications**

1. Moteur à combustion interne qui comprend un cylindre (3), un piston (4) se déplaçant alternativement dans ledit cylindre, des segments (8) prévus seulement à la partie supérieure dudit piston, au moins un orifice de lubrification (10) prévu dans la paroi dudit cylindre, ledit ou lesdits orifices communiquant avec l'espace compris entre ladite paroi et ledit piston, des moyens (16) pour fournir une partie de l'huile de lubrification sous pression audit orifice ou orifices, des conduits pour faire communiquer ledit ou lesdits orifices de lubrification avec lesdits moyens fournissant une partie de l'huile de lubrification et, au moins, une rainure (27) prévue sur le pourtour dudit piston afin de communiquer avec ledit ou lesdits orifices de lubrification, caractérisé en ce qu'une gorge de lubrification (12) est prévue près de la face extérieure dudit cylindre (1) de façon à communiquer avec ledit ou lesdits orifices de lubrification (10), ledit ou lesdits orifices (10) étant placés de façon à déboucher sous le plus bas desdits segments (8) quand ledit piston (4) est à son point mort bas et sont placés pour déboucher contre l'extrémité inférieure de la jupe (4a) dudit piston (4) quand celui-ci est à son point mort haut, des trous de retour d'huile (14, 15) étant prévus entre lesdits segments (4) afin de faire communiquer ledit espace avec l'espace intérieur dudit piston pour retourner l'huile dans le carter dudit moteur, tandis que ladite ou lesdites rainures (27) sont prévues de façon à communiquer avec ledit ou lesdits orifices de lubrification (10) pendant les mouvements alternatifs du piston.

2. Moteur à combustion interne selon la revendication 1, caractérisé en ce que les moyens pour fournir une partie de l'huile de lubrification sont constitués par une pompe (16) fonctionnant en synchronisme avec le vilebrequin du moteur.

3. Moteur à combustion interne selon la revendication 2, caractérisé en ce que ladite pompe (16) est adaptée à fournir l'huile au point mort bas.

4. Moteur à combustion interne selon l'une quelconque des revendications 1 à 3, caractérisé en ce qu'il comprend, au moins, deux orifices de lubrification (10) diamétralement opposés.

5. Moteur à combustion interne selon l'une quelconque des revendications 1 à 4 caractérisé en ce que ladite rainure de lubrification (27) est disposée dans la direction de l'axe du piston.

**Patentansprüche**

1. Verbrennungskraftmaschine mit einem Zylinder (3), einem darin hin- und hergehenden Kolben (4), der nur im oberen Bereich mit Kolbenringen versehen ist, und mit mindestens einem in der Zylinderwand vorgesehenen Öleinlaß (10), der mit dem Raum zwischen der Zylinderwand und dem Kolben in Verbindung steht, wobei Mittel (16) zum Zuführen eines Teils des unter Druck stehenden Schmieröls zu dem Öleinlaß bzw. den Öleinlässen, Leitungen zu deren Verbindung mit den Zuführungsmitteln und mindestens eine mit dem Öleinlaß bzw. den Öleinlässen in Verbindung stehende Ölnut (27) in der Außenwand des Kolbens vorgesehen sind, dadurch gekennzeichnet, daß eine ringförmige Ölnut (12) nahe der Außenseite des Zylinders (3) derart vorgesehen ist, daß sie mit dem Öleinlaß bzw. den Öleinlässen (10) in Verbindung steht, welche so angeordnet sind, daß sie zu einem Kolbenabschnitt hin offen sind, der sich unterhalb eines untersten der Kolbenringe (8) befindet, wenn der Kolben (4) im unteren Umkehrpunkt ist, aber zu einem unteren Endabschnitt der Kolbenschürze (4a) offen sind, wenn der Kolben (4) in seinem oberen Umkehrpunkt ist, wobei Ölrückströmlöcher (14, 15) zwischen den Kolbenringen (8) den obengenannten Raum mit dem Innenraum des Kolbens zwecks Rückführung des Öls in das Kurbelgehäuse der Maschine verbinden, und daß mindestens eine Ölnut (27) vorgesehen ist, die beim Hin- und Hergehen des Kolbens mit dem Öleinlaß bzw. den Öleinlässen (10) in Verbindung steht.

2. Verbrennungskraftmaschine nach Anspruch 1, dadurch gekennzeichnet, daß die Mittel zum Zuführen eines Teils des Schmieröls aus einer Pumpe 16 bestehen, welche synchron mit der Kurbelwelle der Maschine läuft.

3. Verbrennungskraftmaschine nach Anspruch 2, dadurch gekennzeichnet, daß die Pumpe (16) das Öl im unteren Umkehrpunkt zuführt.

4. Verbrennungskraftmaschine nach den Ansprüchen 1, 2 oder 3, dadurch gekennzeichnet, daß mindestens ein Paar diametral gegenüberliegender Öleinlässe (10) vorgesehen ist.

5. Verbrennungskraftmaschine nach einem der Ansprüche 1 bis 4, dadurch gekennzeichnet, daß die Ölnut (27) in axialer Richtung des Kolbens verläuft.

0 003 439

FIG. 1

FIG. 2

0 003 439

FIG. 3

FIG. 4

FIG. 5

2

# FIG. 6 FIG. 7 FIG. 8

# FIG. 9 FIG.10

# FIG.11 FIG.12 FIG.13